**Europäisches Patentamt**

**European Patent Office**

**Office européen des brevets**

(19)

(11) Veröffentlichungsnummer: **0 427 996 A2**

# EUROPÄISCHE PATENTANMELDUNG

(12)

(21) Anmeldenummer: 90120668.0

(22) Anmeldetag: 29.10.90

(51) Int. Cl.⁵: **G01N 21/64**, G01N 21/85, G01N 33/18

(30) Priorität: 16.11.89 DE 3938142

(43) Veröffentlichungstag der Anmeldung:
22.05.91 Patentblatt 91/21

(84) Benannte Vertragsstaaten:
BE DE ES FR GB IT NL

(71) Anmelder: **Krupp MaK Maschinenbau GmbH**
**Falckensteiner Strasse 2-4**
**W-2300 Kiel 17(DE)**

(72) Erfinder: **Witthinrich, Jürgen**
**Clausewitzerstrasse 11**
**W-2300 Kiel 1(DE)**

(74) Vertreter: **Hansmann, Dierk, Dipl.-Ing.**
**Jessenstrasse 4**
**W-2000 Hamburg 50(DE)**

(54) **Verfahren und Vorrichtung zur qualitativen und quantitativen Bestimmung von Inhaltsstoffen.**

(57) Es ist hierbei vorgesehen, eine Bestimmung von Inhaltsstoffen, insbesondere aromatischen Kohlenwasserstoffen, in flüssigen Medien über optische Meßelemente mit elektromagnetischer Strahlung durch Lichtübertragung vorzusehen. Dieses erfolgt über die Verwendung einer Anregungseinheit zur Erzeugung und Einstellung einer variabel definierbaren elektromagnetischen Strahlung, die in einen Inline-Meßkopf eingebracht wird und die Veränderungen über eine Empfängereinheit mit Detektoren erfaßbar sind. Die Steuerung der optischen Messungen, die Auswertung und erforderliche Anpassung werden über eine Rechnereinheit vorgenommen.

FIG. 2

EP 0 427 996 A2

# VERFAHREN UND VORRICHTUNG ZUR QUALITATIVEN UND QUANTITATIVEN BESTIMMUNG VON IN-HALTSSTOFFEN

Die Erfindung bezieht sich auf ein verfahren und eine Vorrichtung zur qualitativen und quantitativen Bestimmung von Inhaltsstoffen, insbesondere aromatischen Kohlenwasserstoffen, in flüssigen Medien über optische Meßelemente mit elektromagnetischer Strahlung durch Lichtübertragung in das zu untersuchende Medium und Auswertung nach einer vorliegenden optischen Eigenschaft.

Es sind bereits optische Verfahren und Vorrichtungen zur Bestimmung von Inhaltsstoffen bekannt. Hierbei werden in der optischen Prozeßmeßtechnik Absorptions-und Streulichtphotometer sowie neuerdings Fluorometer verwendet. Es hat sich aber gezeigt, daß diese bekannten Anordnungen durch die Meßmethode selbst oder durch die gerätetechnische Ausbildung Meßfehler und Unsicherheiten aufweisen, die auch durch eine aufwendige Handhabung und eine komplizierte Hardware herbeigeführt werden.

Häufig ist die Ursache für große Meßfehler im Meßverfahren selbst zu suchen, weil das Meßverfahren nicht selektiv genug für die Meßaufgabe ist. Außerdem können Meßfehler aufgrund zusätzlich detektierter Partikel und/oder Inhaltsstoffe das Meßergebnis verfälschen, bzw. es sind Meßfehler nicht auszuschließen.

Die Streuung gibt beispielsweise Informationen über Partikel in der Flüssigeit. Sie ist abhängig von der Partikelanzahl, der Partikelgröße, der Partikelform und dem Streuwinkel. Eine Streulichtmessung kann also strenggenommen nur für Partikelmessung benutzt werden und gibt damit keine Aussage für in Lösung befindliche Inhaltsstoffe.

Die Absorption gibt beispielsweise Informationen über die in Lösung befindlichen Inhaltsstoffe der Flüssigkeit. Sie ist abhängig von der Extinktion, der Konzentration und der Schichtdicke.

Die Fluoreszenz gibt ebenfalls Informationen über die in Lösung befindlichen Inhaltsstoffe der Flüssigkeit. Sie ist abhängig von der Quantenausbeute, dem Absortionskoeffizienten, der Schichtdikke und der Konzentration. Prinzipbedingt ist die Fluoreszenzmethode um den Faktor 1000 empfindlicher als die Absorptionsmethode.

Bei der Verwendung dieser Meßverfahren zur Konzentrationsbestimmung in einer Flüssigkeit kommt als Abhängigkeit die eingestrahlte Lichtenergie, die ausgestrahlte Lichtenergie und die eingesetzte Wellenlänge hinzu.

Es ist bekannt, diese drei Meßverfahren jeweils einzeln einzusetzen. Bei allen diesen Meßverfahren und Geräteausführungen sind durch folgende meßverfahrensmäßigen und/oder gerätetechnischen Eigenschaften für die prozeßtechnische Anwendung je nach Meßverfahren mit gewollten und auch ungewollten die Messung störenden Einflüssen zu rechnen.

- Intensitätsschwankungen der Strahlungsquelle
- Verschmutzung der Optik
- streulichtbedingte Intensitätsschwankungen durch Partikel in der zu untersuchenden Flüssigkeit (wellenlängenabhängig)
- absorptionsbedingte Intensitätsschwankungen durch in Lösung befindliche Substanzen (wellenlängenabhängig)

Diese Fehlermöglichkeiten werden insgesamt noch nicht befriedigend durch Kompensationsverfahren bzw. Kalibrierverfahren korrigiert.

Bei einer Kohlenwasserstoffmessung mit Hilfe der Streulichtmessung werden nur die Ölpartikel detektiert und nicht der in Lösung gegangene Anteil der KW's. Das bedeutet, daß es ein partikelspezifisches und nicht ein stoffspezifisches Meßverfahren ist. Die Teilchengröße und -form sowie die verwendete Wellenlänge spielen eine entscheidende Rolle. Verändern sich diese Parameter, so ist auch der gemessene Wert nicht mehr repräsentativ für die Konzentration.

Bei einer Kohlenwasserstoffmessung mit der IR-Absorptionsmethode wird beispielsweise nur der Alifatenanteil befriedigend bestimmt. Die Aromatenbestimmung ist aufgrund der geringen spektralen Absorptionskoeffizienten der aromatischen CH-Valenzschwingungen in dem verwendeten Wellenlängenbereich nicht ausreichend.

Der routinemäßige Laboreinsatz von Fluoreszenz-Spektralfluorometern in den Umweltlabors und der Mineralölindustrie zur Aromatenbestimmung macht den Stellenwert der Meßmethode deutlich. Auch die deutschen Einheitsverfahren (DEV) zur Wasser-, Abwasser- und Schlammuntersuchung (DIN 38409/H18) weisen auf die wesentlich empfindlichere UV-Spektroskopie für die Untersuchung an Aromaten hin. Ein entsprechendes genormtes Laborverfahren ist in Vorbereitung.

Für den Prozeßeinsatz der Fluoreszenzmethode werden Filterfluorometer bzw. modifizierte Laborfluorometer eingesetzt bei denen folgende Schwierigkeiten auftreten.

Bei den Filterfluorometern ist durch die gerätetechnische Ausführung eine geringe Auflösung des Wellenlängenbereiches gegeben. Eine Wellenlängenänderung ist mit einer Hardware-Änderung verbunden.

Für beide Ausführungen (Filterfluorometer und Laborfluorometer) sind nicht alle für den Prozeßeinsatz notwendigen und möglichen Kompensationsbzw. Korrekturmöglichkeiten (s.o.) hinsichtlich der Meßfehler realisiert.

Die Aufgabe der Erfindung ist es, ein gattungsgemäßes Verfahren und eine Vorrichtung zu schaffen, die eine kontinuierliche Erfassung der qualitativen und quantitativen Bestimmungen von Inhaltsstoffen, insbesondere von aromatischen Kohlenwasserstoffen, in Abwassern in einfacher Weise ermöglicht und auch eine Korrektur bei störenden Einflüssen gewährleistet.

Die Lösung dieser Aufgabe wird dadurch erzielt, daß eine Anregungseinheit zur Erzeugung und Einstellung einer variabel definierbaren elektromagnetischen Strahlung zur Messung optischer Eigenschaften, wie Absorption, Streuung, Transmission, Attenuation, Fluoreszenz und Polarisation einzeln und in Kombination über einen Meßkopf vorgesehen ist, wobei über den Meßkopf als Inline-Meßkopf die Veränderungen der eingestrahlten elektromagnetischen Strahlung über eine Empfängereinheit mit Detektoren erfaßbar sind, wobei die Steuerung verschiedener optischer Messungen, die Auswertung sowie die Anpassung an den Meßprozeß über eine Rechnereinheit vorgenommen wird.

Die Ausbildung der Vorrichtungen hierfür sind durch die Merkmale der Unteransprüche 2 bis 15 gekennzeichnet.

Durch die erfindungsgemäße Ausbildung ist es möglich, mit geringem alternativem Aufwand ein auf das zu untersuchende Abwasser anpaßbare Sensorsystem zu schaffen, das mit hoher Empfindlichkeit und großer Selektivität eine schnell Informationsgewinnung gewährleistet. Ein wesentlicher Vorteil besteht in der beliebigen Kombination von verschiedenen Meßverfahren, um somit eine Ausgleichsmöglichkeit der Schwächen des einen mit dem anderen Meßverfahren zu schaffen.

In der Zeichnung sind Ausführungsbeispiele der Erfindung schematisch dargestellt. Es zeigen:

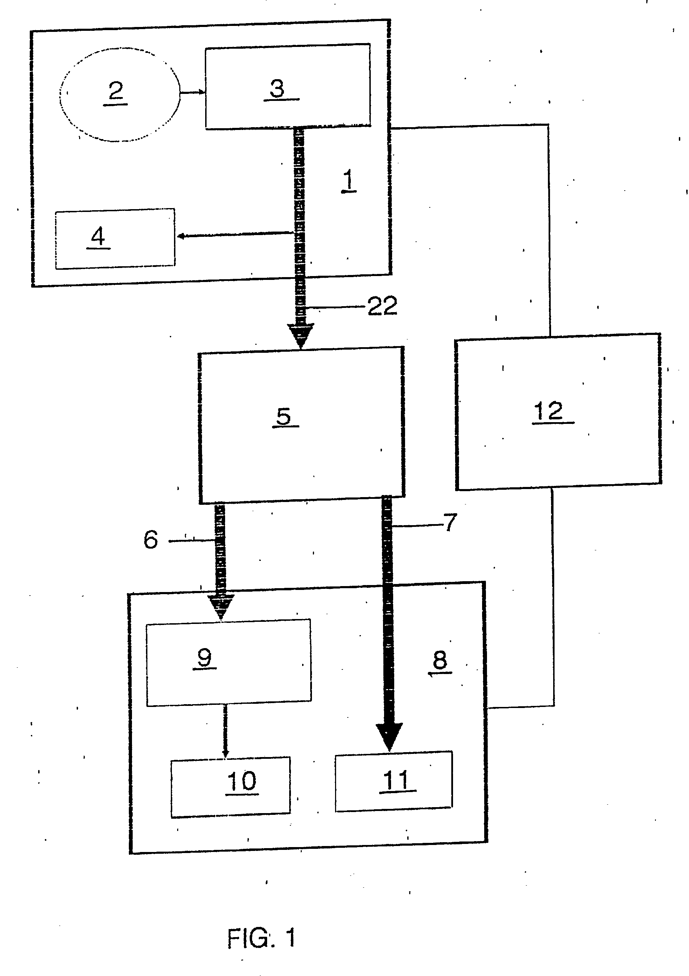

Fig. 1 ein Blockschaltbild einer Anordnung,

Fig. 2 einen prinzipiellen Aufbau einer Meßkopfspitze,

Fig. 3 eine weitere Ausbildung einer Meßkopfspitze mit einer zweiten Meßkopfstrecke größerer Schichtdicke als die ersten Meßstrecke.

Die Ausbildung besteht aus einer Anregungseinheit 1, wobei eine Lichtquelle 2 über eine Lichtwellenlängenselektion 3 angeordnet und ein Lichtquellenmonitor 4 zugeordnet ist. Das Signal der Anregungseinheit 1 wird über eine Lichtleiter 22 einem Inline-Meßkopf 5 zugeführt und dann über Lichtleiter 6,7, in diesem Fall als zwei getrennte Signale, einer Empfängereinheit 8 zugeführt. Das eine Signal über den Lichtleiter 6 wird dabei über eine Emissionswellenlängenselektion 9 einem Detektor 10 zugeführt, während das weitere Signal über den Lichtleiter 7 direkt einem Detektor 11 zugeführt wird. Zur Auswertung und Steuerung sowie Aufnahme der Auswertelogarithmen und der erforderlichen Daten ist die Anregungseinheit 1 und Empfängereinheit 8 mit einer Rechnereinheit 12 verbunden.

Der Inline-Meßkopf 5 besitzt zur Einkopplung des Signals ein optisches Fenster 13, so daß ein in einem Einschnitt 14 aufgenommenes Medium als Meßstrecke 15 durchdrungen wird und auf der gegenüberliegenden Seite über ein optisches Fenster 16 wieder dem Inline-Meßkopf 5 zugeführt und der Empfängereinheit 8 nach Umlenkung über entsprechende Hilfsmittel 17 zugeführt wird. In diesem Fall wird das eingekoppelte Signal durch ein weiteres optisches Fenster 18 als 90°-Signal ausgekoppelt und der Empfängereinheit 8 zugeführt.

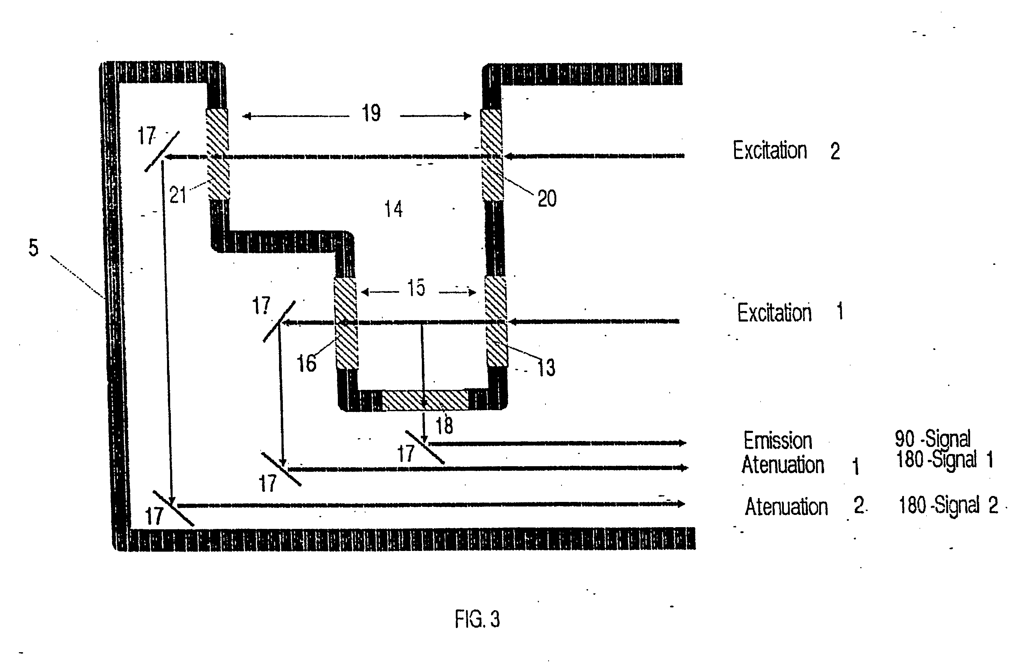

In der Ausbildung gemäß Fig. 3 ist eine zweite Meßstrecke 19 angeordnet, die gegenüber der Meßstrecke 15 größer bemessen ist. Hierbei wird dann ein zweites Signal von der Anregungseinheit 1 dem Inline-Meßkopf 5 über optische Fenster 20,21 zugeführt.

Mit dieser Anordnung ist vorgesehen, eine optische Bestimmung von Aromaten in gereinigten Industrieabwässern durch deren Bestrahlung mit elektromagnetischer Strahlung vorzunehmen. Über die Veränderung der eingestrahlten elektromagnetischen Strahlung werden mit Hilfe der Detektoren Informationen über die Qualität und Quantität von Aromaten in der zu untersuchenden Flüssigkeit gewonnen.

Das Meßverfahren beruht auf der Methode der Fluoreszenz-Spektroskopie. Fluoreszenz ist die Eigenschaft bestimmter Stoffe, absorbiertes Licht unter einer spektralen Wellenlängenverschiebung zu größeren oder höchstens gleichen Wellenlängen wieder zu emittieren. Aromaten besitzen diese Eigenschaft, wobei die spektral zerlegte Fluoreszenzstrahlung des Stoffes substanzspezifisch ist. Die Information des sogenannten "Fingerprints" des zu detektierenden Stoffes ist in der Wellenlänge der Fluoreszenzexcitation und -emission zu finden. Die Information der Konzentration des fluoreszierenden Stoffes in einer Lösung ist der Intensität der Fluoreszenzstrahlung zu entnehmen. Bei genügend großer Verdünnung der Lösung besteht ein linearer Zusammenhang zwischen Fluoreszenzintensität einer Substanz und deren Konzentration.

Da in der Praxis die Abwässer verschiedener Industrien je nach Produktionsprozessen auch verschiedene Zusammensetzungen der Stoffkomponenten haben, ist es notwendig, die Messung je nach Anwendungsfall auf die Meßaufgabe anzupassen. Das bedeutet konkret eine Anpassung der elektromagnetischen Excitations- und Emissionsstrahlung sowie der optischen Strahlengänge. Dieses muß bei der vorgesehenen Ausbildung für die Aromatenmessung erreicht werden, ohne eine Änderung der Geräte-Hardware vorzunehmen. Die Anordnung ist so aufgebaut, daß diese Anpassungen an die Meßaufgabe durch eine Software-Einstellung möglich ist.

Durch die Lichtübertragung von der Anregungseinheit 1 wird die elektromagnetische Strahlung der Lichtquelle 2 mittels des Inline-Meßkopfes 5 in die im Einschnitt 14 aufgenommene, zu untersuchende Flüssigkeit eingestrahlt. Durch die Anordnung ist sichergestellt, daß die zur Fluoreszenzanregung verwendete elektromagnetische Strahlung definiert ist in Intensität, Wellenlänge, Bandbreite und Auflösung. Diese Eigenschaft der Anregungseinheit 1 wird dadurch erreicht, daß als Lichtquelle 2 eine Xenon-Blitzlichtlampe (mit kontinuierlichem Spektrum bis in den UV-Bereich) verwendet wird, wobei die zur Anregung der Fluoreszenz eingesetzten Wellenlängen mittels eines Monochromators selektiert und über die Lichtübertragung zum Inline-Meßkopf 5 geleitet werden.

Bei der Anordnung 3 zur Wellenlängenselektion handelt es sich um eine Monochromator bestehend aus einem elektromechanisch drehbaren konkaven holographischen Gitter, einem veränderbaren Spalt und einem Strahlteiler für den Referenzstrahlengang zum Lichtquellenmonitor 4.

Bevor die monochromatische Strahlung die Anregungseinheit 1 verläßt, wird über den Lichtquellenmonitor 4 die Intensität gemessen oder dieses Signal zur Regelung des Lampennetzteiles verwendet, so daß über die Meßzeit eine konstante oder bekannte Anregungsintensität sichergestellt ist.

Nach der Kontrollmessung der Excitationsstrahlung wird die elektromechanische Strahlung in Lichtleiter 22 eingekoppelt und über diesen zum Inline-Meßkopf 5 zugeführt. Für diese Form der Lichtübertragung muß mit Quarzlichtleitern gearbeitet werden, um auch den UV-Anteil der Strahlung übertragen zu können.

Nach der Wechselwirkung der elektromagnetischen Strahlung mit der zu untersuchenden Flüssigkeit wird diese über die optischen Fenster 16,18 wird sie durch den Inline-Meßkopf 5 wieder aufgenommen und ebenfalls über Lichtleiter 6,7 zur Empfängereinheit 8 geleitet. Dabei werden in diesem Fall zwei voneinander getrennte Signale vom Inline-Meßkopf 5 aufgenommen und von der Empfängereinheit 8 verarbeitet.

Das von der über das optische Fenster 18 als 90°-Meßstrecke kommende Signal wird nach der Einkopplung in die Empfängereinheit 8 über eine Emissionswellenlängenselektion 9 einem Detektor 10 zugeführt. Dadurch ist es möglich, die Signalintensität definiert nach Wellenlänge, Bandbreite und Auflösung zu bestimmen. Bei der Emissionswellenlängenselektion handelt es sich um einen Monochromator bestehend aus einem elektromechanisch drehbaren konkaven holographischen Gitter und einem veränderbaren Spalt. Der Empfänger kann durch einen Photomultiplier realisiert werden.

Sämtliche optischen Bauteile für Anregungs-, Empfangseinheit 1,8 und auch der Lichtübertragung 6,7,22 müssen aus UV-durchlässigem Material aufgebaut werden.

Das von der 180°-Meßstrecke kommende Signal wird nach der Einkopplung in die Empfängereinheit 8 ebenfalls einem Detektor 11 zugeführt. Hierbei handelt es sich um eine Photodiode. Die Lichtleitereinkopplung erfolgt auch hier mit einer Quarzglasoptik.

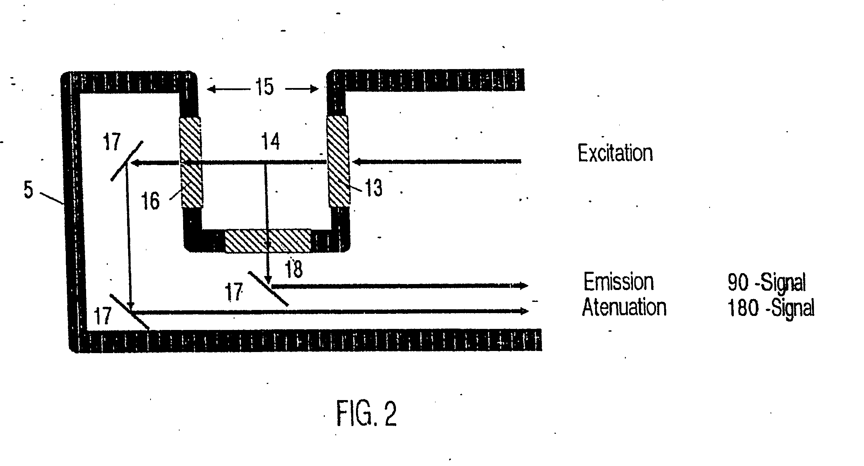

Der im Medium befindliche Teil des Inline-Meßkopfes 8 bildet die Schnittstelle zwischen dem Sensor und der zu untersuchenden Flüssigkeit. Es wird gemäß Fig. 2 die Excitationsstrahlung durch eine Quarzglasoptik als optisches Fenster 13 in das Medium geführt. Die durch die Wechselwirkung mit dem Medium hervorgerufene Veränderung der elektromagnetischen Strahlung wird über die 90°- und die 180°-Meßstrecke wiederum über eine Quarzglasoptik als optische Fenster 16,18 vom Inline-Meßkopf 5 aufgenommen. In dem 90°-Signal ist die Information über die 90°-Fluoreszenz und Streuung, und im 180°-Signal steckt die Information der Attenuation.

Eine andere Variante gemäß Fig. 3 zeigt zusätzlich zur beschriebenen Anordnung eine zweite Attenuationsmeßstrecke 19 mit größerer Sichtdicke der Flüssigkeit.

Bei beiden Ausführungen ergibt sich damit die Möglichkeit, gleichzeitig aus derselben Flüssigkeitsprobe verschiedene Meßparameter aufzunehmen.

Gemäß der Ausbildung in Fig. 2 ist aus der 90°-Fluoreszenz die 90°-Streuung und die Attenuation ermittelbar. Eine Trennung der Fluoreszenz und der Streuung wird in der Empfangseinheit durch den Emissionsmonochromator erreicht, da das Streulichtsignal die gleiche Wellenlänge wie die Anregungsstrahlung haben muß. Die Wellenlängen, die von der Anregungswellenlänge abweichen, entsprechen der Fluoreszenz. Durch eine Aufnahme der Einflüsse der Streuung auf die Fluoreszenz läßt sich dann deren Wert korrigieren.

Über die 180°-Attenuationsstrecke wird ein Signal ermittelt, das sich aus der Lichtschwächung, hervorgerufen durch Streuung, Absorption und Scheibenverschmutzung zusammensetzt.

Diese Einflüsse können auch Auswirkungen auf das Fluoreszenzsignal haben. Sobald ein Streulicht- oder Attenuationssignal detektiert wird, ist mit Fehlern im Fluoreszenzsignal zu rechnen. Die einfachste Möglichkeit ist, die Fluoreszenzmessung abzubrechen bis die Voraussetzungen für eine korrekte Messung gegeben sind. Durch eine Aufnahme der unerwünschten Einflüsse auf die Fluoreszenz läßt sich deren Wert aber auch korrigieren.

Gemäß der Ausbildung nach Fig. 3 wird zusätzlich ein zweites Attenuationssignal erzeugt. Hierbei sind für beide Signale unterschiedliche Meßstreckenlängen 15,19 vorgesehen. Da für beide Meßstrecken 15,19 die Flüssigkeit die gleiche ist und die Meßstrecken bekannt sind, ist die einzige Unbekannte die Verschmutzung der optischen Fenster 13,16,20,21. Bei vorausgesetzter gleicher Verschmutzung aller Durchtritte des Inline-Meßkopfes 5 wird die Scheibenverschmutzung mit diesem Aufbau selektiv detektiert und damit kann auch deren Einfluß auf die anderen Messungen berücksichtigt werden.

**Ansprüche**

1. Verfahren zur qualitativen und quantitativen Bestimmung von Inhaltsstoffen, insbesondere aromatischen Kohlenwasserstoffen, in flüssigen Medien über optische Meßelemente mit elektromagnetischer Strahlung durch Lichtübertragung in das zu untersuchende Medium und Auswertung nach einer vorliegenden optischen Eigenschaft, dadurch gekennzeichnet, daß eine Anregungseinheit (1) zur Erzeugung und Einstellung einer variabel definierbaren elektromagnetischen Strahlung zur Messung optischer Eigenschaften, wie Absorption, Streuung, Transmission, Attenuation, Fluoreszenz und Polarisation einzeln und in Kombination über einen Meßkopf (5) vorgesehen ist, wobei über den Meßkopf (5) als Inline-Meßkopf die Veränderungen der eingestrahlten elektromagnetischen Strahlung über eine Empfängereinheit (8) mit Detektoren (10,11) erfaßbar sind, wobei die Steuerung verschiedener optischer Messungen, die Auswertung sowie die Anpassung an den Meßprozeß über eine Rechnereinheit (12) vorgenommen wird.

2. Vorrichtung zur Durchführung des Verfahrens nach Anspruch 1, dadurch gekennzeichnet, daß die Anregungseinheit (1) durch eine Lichtquelle (2) mit einer Anregungswellenlängenselektion (3) und einen Lichtquellenmonitor (4) gebildet ist.

3. Vorrichtung nach Anspruch 2, dadurch gekennzeichnet, daß die Lichtquelle (2) der Anregungseinheit (1) eine Blitzlichtquelle mit kontinuierlichem Spektrum ist und dem Lichtquellenmonitor (4) zur Intensitätsregelung und/oder Intensitätskontrolle zugeordnet ist.

4. Vorrichtung nach Anspruch 2 oder 3, dadurch gekennzeichnet, daß die Anregungswellenlängenselektion (3) aus einem Monochromator mit variablem Eingang- und Ausgangsspalt und einer optischen Bank besteht.

5. Vorrichtung zur Durchführung des Verfahrens nach Anspruch 1, dadurch gekennzeichnet, daß der Inline-Meßkopf (5) über mindestens je ein optisches Fenster (13,16;20,21) für die von der Anregungseinheit (1) eingehenden elektromagnetischen Strahlung zur Empfängereinheit (8) durch das zu untersuchenden Medium mit einer definierten Meßstrecke (15,19) aufweist.

6. Vorrichtung nach Anspruch 5, dadurch gekennzeichnet, daß der Inline-Meßkopf (5) mehrere Meßstrecken (15,19) mit unterschiedlichen Längen aufweist.

7. Vorrichtung nach Anspruch S oder 6, dadurch gekennzeichnet, daß mindestens eine Meßstrecke im Inline-Meßkopf (5) als 90°-Meßstrecke über ein entsprechend zugeordnetes optisches Fenster (18) zur Auskopplung ausgebildet ist.

8. Vorrichtung nach einem der Ansprüche 5 bis 7, dadurch gekennzeichnet, daß der Inline-Meßkopf (5) polarisierende Einheiten zur Ausblendung eingestellter Polarisationsebenen aufweist.

9. Vorrichtung zur Durchführung des Verfahrens nach Anspruch 1, dadurch gekennzeichnet, daß die Empfängereinheit (8) durch wenigstens einen Detektor (10,11) zur Erfassung der Veränderung der eingebrachten elektromagnetischen Strahlung in das flüssige Medium als Strahlungsintensität bezüglich der Werte, wie Wellenlänge, Bandbreite, Polarisation und Auflösung, gebildet ist.

10. Vorrichtung nach Anspruch 9, dadurch gekennzeichnet, daß die Empfängereinheit (8) eine dem Detektor (10) vorgeschaltete Emissionswellenselektion (9) zur Erfassung von monochromatischem Licht mit Werten, wie definierte Intensität, Wellenlänge, Bandbreite und Auflösung, aufweist.

11. Vorrichtung nach Anspruch 9 oder 10, dadurch gekennzeichnet, daß der Emissionswellenselektor (9) aus einem Monochromator mit variablem Eingangs-und Ausgangsspalt und einer optischen Bank besteht.

12. Vorrichtung nach einem der Ansprüche 9 bis 11, dadurch gekennzeichnet, daß die Lichteinkopplung in die Empfängereinheit (8) für jede Meßstrecke (15,19) getrennt ausgebildet ist.

13. Vorrichtung nach einem der Ansprüche 1 bis 12, dadurch gekennzeichnet, daß wenigstens eine Lichtübertragung von der Anregungseinheit (1) für die Excitation ausgebildet ist.

14. Vorrichtung nach einem der Ansprüche 1 bis 13, dadurch gekennzeichnet, daß wenigstens zwei Lichtübertragungen vom Inline-Meßkopf (5) für die Emission ausbildbar sind.

FIG. 1

EP 0 427 996 A2

FIG. 2

FIG. 3

Excitation 2

Excitation 1

Emission 90-Signal
Atenuation 1 180-Signal 1

Atenuation 2 180-Signal 2

EP 0 427 996 A2